# EUROPEAN PATENT SPECIFICATION

(11) **EP 2 416 047 B1**
(45) Date of publication and mention of the grant of the patent: **14.10.2015**
(21) Application number: 11176275.3
(22) Date of filing: 02.08.2011
(51) Int. Cl.: F16M 5/00, F02B 63/00, H02K 5/26

(54) **Bed frame for a machine**
Maschinenuntergestellerahmen
Châssis de bâti pour machine

(30) Priority: 04.08.2010 GB 201013154
(43) Date of publication of application: 08.02.2012
(73) Proprietor: Cummins Power Generation Limited, Ramsgate, Kent CT12 5BF (GB)
(72) Inventor: Milnes, Robert, Ramsgate, Kent CT12 5BF (GB); Poole, Matthew, Ramsgate, Kent CT12 5BF (GB); Parry, Vincent, Ramsgate, Kent CT12 5BF (GB)
(74) Representative: Williams, Michael Ian

(56) References cited:
- DE-A1-102007 034 408
- DE-U1- 29 915 910
- US-A- 3 860 206

## Description

This invention relates to a system for mounting and adjusting a component of a machine such as an engine or a generator, and in particular to a method of adjusting a mounting member for a component of the machine, so as to align the components.

When assembling a machine such as an engine of a generator set, the components are usually mounted on a bed frame. The components may be large and heavy and have to be aligned precisely. For example, an engine generally includes a cooling fan which protrudes from one side of the engine, and which has to be aligned in a circular recess or cowl in a radiator housing. Failure to align the cooling fan precisely with the radiator may result in reduced cooling efficiency or mechanical failure.

Each component is commonly mounted on a cross member of the bed frame, each cross member extending between side members of the frame. One method of aligning a component is to mount it on a cross member, and then to adjust the height and/or angle of the cross member before bolting it in position to the side frame members. However, this is a cumbersome process requiring external components to carry and move the component on the cross member, such as large external jigs.

DE 29915910 U1 discloses a mounting frame for electronic equipment. The mounting frame comprises a pair of opposing side members and a cross member. A bracket is screwed onto the side member. The bracket includes a bearing plate. A threaded spindle passes through the bearing plate, and engages with an inner thread on the cross member. This allows the height of the cross member to be adjusted.

According to one aspect of the present invention there is provided a system for mounting and adjusting a component of a machine as claimed in claim 1.

In use, the cross member carrying the component may be placed on the side frame members, and then the jacking member may be moved until the required position of the cross member relative to the side member is reached to align the component with other components of the machine. The cross member may then be secured in position.

By providing the side member with a recess or cut-out arranged to receive a tool having a plate for providing a jacking surface, distortion of the side member may be prevented, and the cost of the side member may be kept down.

Preferably there is at least one adjustment arrangement at each end of the cross member, and more preferably there are two spaced adjustment arrangements at each end of the cross member. This can allow the height and angle of the cross member to be fully adjustable.

The jacking member may be a threaded component such as a bolt or a screw, although any other type of jacking member such as a ratchet could be used instead. The mount may comprise a screw threaded portion or nut, and the mount may be provided on the cross member. Conveniently, the nut or screw threaded portion may be provided on a tab extending from the end of the cross member for resting on the side member. Thus turning the screw changes the height of the cross member relative to the side member. Once the cross member is secured in position, the screw may be removed.

The tool is designed to be removable from the side member. In this way the tool can provide the jacking surface while the position of the cross member relative to the side member is being adjusted, and can subsequently be removed. This arrangement can help prevent distortion of the side member, while keeping down the cost of the side member by avoiding the need to provide a permanent jacking surface.

The tool preferably has a pair of such plates extending from a body portion. The tool may further comprise a handle portion for gripping the tool. Preferably, the tool may be formed of shaped sheet metal material. The tool may comprise magnetic material for keeping the tool in place against the side member during use. The tool may also include flexible attachment members such as strings or wires for attaching the tool to the jacking members or screws.

In a one embodiment of the invention, the machine is an engine and the component is a radiator which is to be aligned with a fan.

According to another aspect of the invention there is provided a method of assembling a bed frame as claimed in claim 15.

Features of one aspect of the invention may be provided with any other aspect. Apparatus features may be provided with method aspects and vice versa.

Preferred features of the present invention will now be described, purely by way of example, with reference to the accompanying drawings, in which:
Figure 1 is a perspective view of part of a bed frame and machine according to one embodiment of the invention;
Figure 2 is a side view of the bed frame of Figure 1;
Figure 3 is a further perspective view of the bed frame of Figure 1 from underneath;
Figure 4 is further perspective view of the bed frame of Figure 1 from above;
Figure 5 is a further perspective view of the bed frame from below;
Figure 6 is a perspective of part of the bed frame without the machine; and
Figure 7 is view of a tool for use in assembling the bed frame.

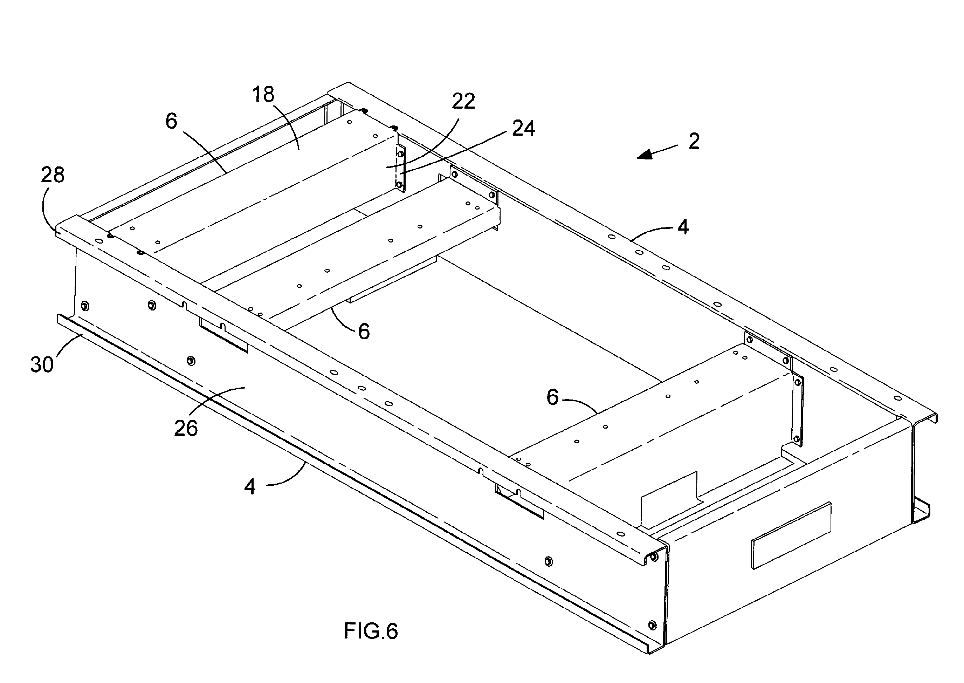

Referring first to Figure 6, a bed frame 2 has a pair of opposed side members 4, and cross members 6 for mounting components of the machine. The cross members 6 have a U-shaped cross section, with a top surface 18, and depending legs 20, 22. The legs include flanges 24 at each end for bolting the cross member 6 to the side member 4 when in position. The side members 4 also have a U-shaped cross section, each having a main face 26 and upper and lower edges 28, 30. The main face 26 of the side member generally includes slots (not shown) for receiving bolts for securing the cross member flanges 24 to the main face 26 of the side member 4. The slots allow some vertical movement of the cross member, in order to allow the height and angle of the cross member to be adjusted. Once the cross member is correctly aligned, the bolts are tightened to prevent further movement.

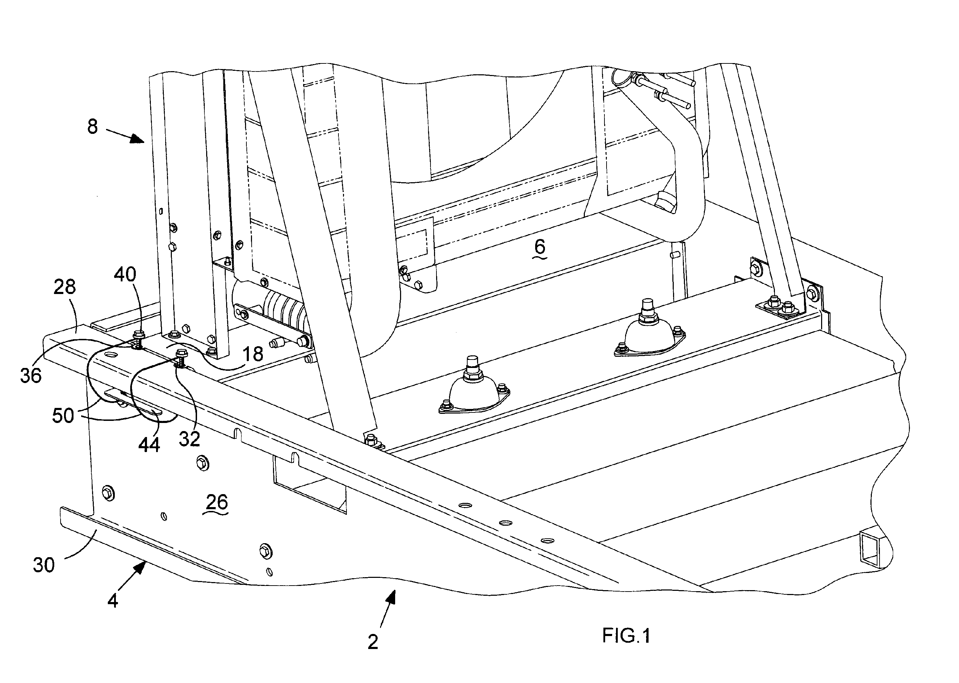

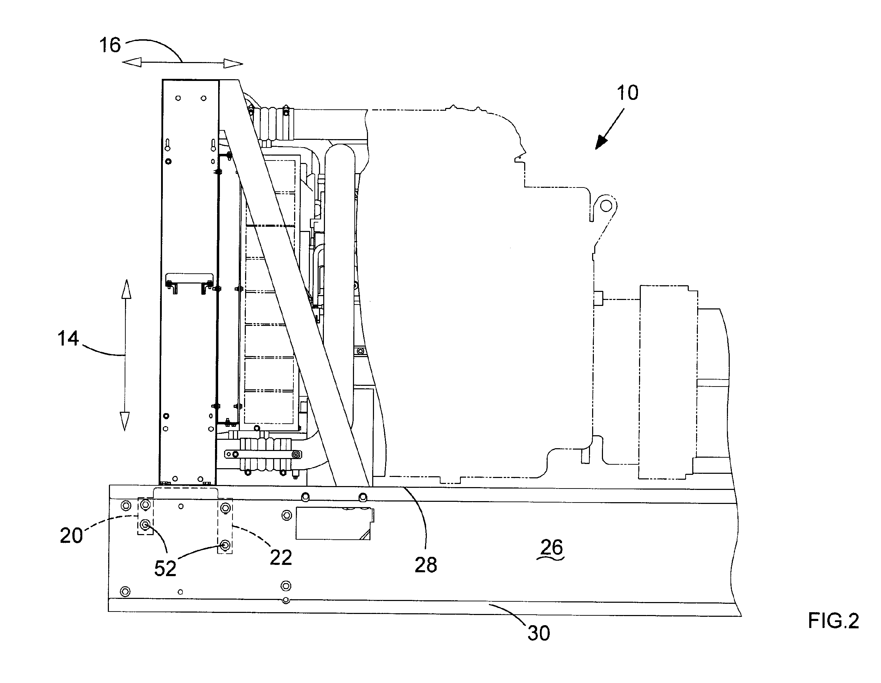

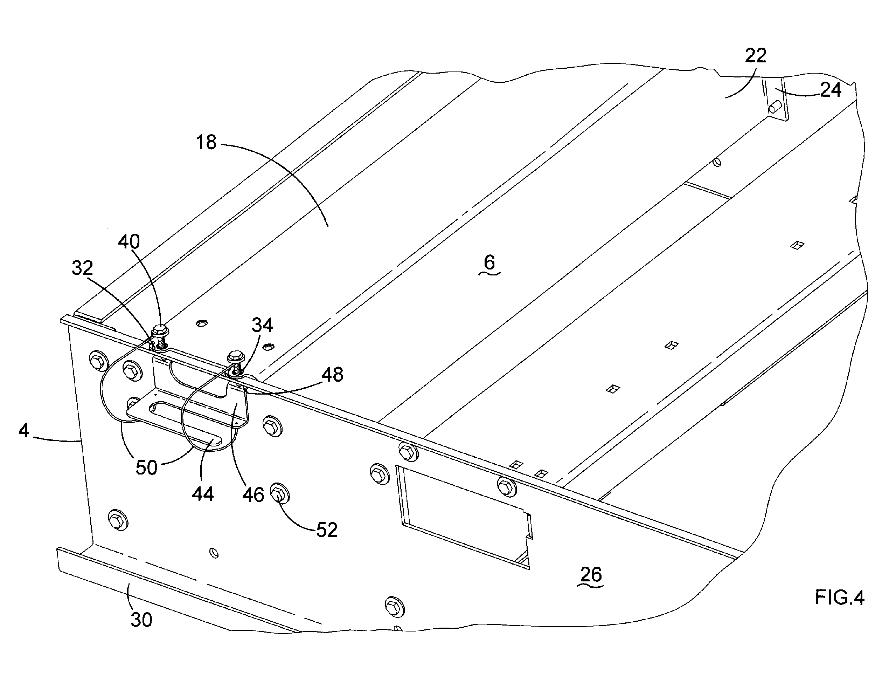

Referring now to Figures 1 to 5, the cross member 6 is used to mount a component of a machine, in this case a radiator 8. Other components of the machine, such as an engine 10 (see Figure 2) may be mounted to other cross members extending between the pair of side members 4. In this case it is important to align the radiator 8 with a fan extending from the engine 10. Depending on manufacturing tolerances, this may require adjusting the height of the radiator 8, as shown by arrow 14, and also the angle of the radiator, as shown by arrow 16.

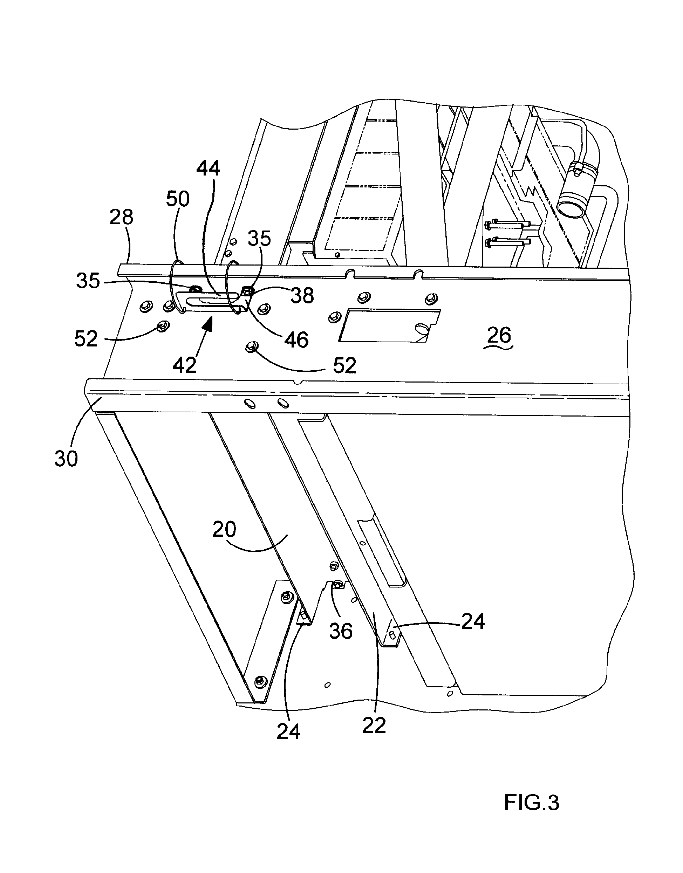

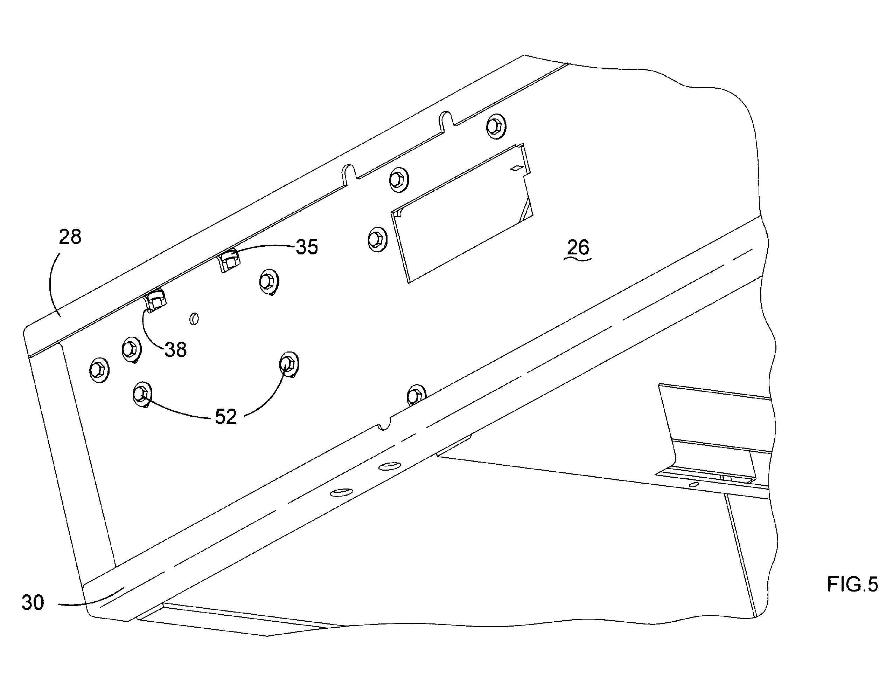

To provide an adjustment arrangement, the cross member 6 has a pair of tabs 32 extending from each end of the top surface 18 thereof, including an aperture 34 with a nut 35 affixed to the underside thereof (see Figure 5), for mounting a pair of jacking screws 40. The upper edge 28 of the side member 4 has corresponding cut-outs 36 for accepting the tabs 32. As can be seen also from Figure 3, the cut-outs 36 extend downwardly into the main face 26 of the side member 4 terminating in a jacking surface 38 at the base thereof. The cut-outs 36 thus provide spaces for accepting the pair of jacking screws 40 extending through the apertures 34 in the tabs 32.

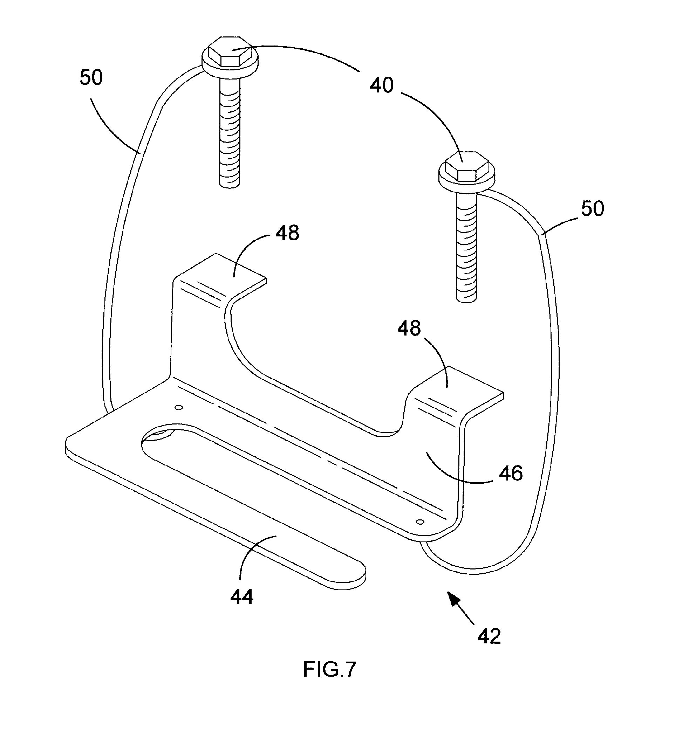

Referring to Figures 3, 4 and 7, a tool 42, formed of sheet metal material, has a handle portion 44, a body portion 46, and a pair of jacking plates 48. The jacking plates 48 extend perpendicular to the body portion 46 and are shaped to fit within the cut-outs 36 in the face 26 of the side member 4, each resting on the jacking surfaces 38 of the cut-out 36. The tool 42 may be magnetised such that the body portion 46 lying against the main face 26 of the side member 4 is held in place once the jacking plates 48 are inserted into the cut-outs 36. A handle portion 44 extends perpendicular to the body portion 46 in the opposite direction from the jacking plates 48 for the user to grip the tool 42 and place it in position. The tool 42 also includes a pair of wires 50 attaching the screws 40 to the tool 42, for ease of use.

In use, the cross member 6, to which the radiator is attached, is placed onto the side member 4, with the tabs 32 located in the cut-outs 36. The tool 42 is inserted under the upper edge 28 of the side member 4, such that the jacking plates 48 enter the cut-outs 36 and rest on the lower surfaces 38 thereof. The jacking screws 40 attached to the tool 42 may then be inserted through the apertures 34 in the tabs 32 of the cross member 6 so as to engage with the screw thread of the nuts 35. This process is repeated at the other end of the cross member 6 such that four jacking screws 40 are in place.

By turning the screws 40, the position of the cross member relative to the side member at each jacking location can be adjusted, with the screws 40 being against the plates 48, effectively to adjust the distance between the jacking surfaces 38 and the tabs 32. Thus it is possible precisely to align the radiator 8 with other components of the machine, by moving the component up and down as well as adjusting the angle of the component in relation to the bed frame 2, depending upon the relative positions of the jacking screws 40. Once the correct alignment has been achieved, the bolts 52 connecting the flanges 20, 22 at each end of the cross member 6 to the side frame member 4 are tightened to secure the radiator component in position. The tool 42 may then be removed from each side of the frame 2.

The arrangement described above allows fine adjustment of the vertical plane and the vertical tilt axis about the cross member by virtue of the integrated jacking system and tool.

## Claims

1. A system for mounting and adjusting a component of a machine, the system comprising:
a bed frame (2) for the machine, the bed frame comprising a pair of opposing side members (4) and a cross member (6) for mounting a component of the machine, the cross member (6) extending between the side members (4) and being attachable to the side members; and
an adjustment arrangement for adjusting the position of the cross member relative to the side member, the adjustment arrangement comprising a mount (32) for a jacking member (40), the mount being associated with the cross member (6),
**characterised in that**:
the system further comprises a removable tool (42) comprising a jacking member (40), the removable tool (42) providing a jacking surface for the jacking member;
the side member (4) comprises a recess or cut-out (36) arranged to receive the tool (42); and
the tool (42) comprises a plate (48) which is arranged to fit within the recess or cut-out of the side member for providing the jacking surface.

2. A system according to claim 1, wherein two spaced adjustment arrangements are provided at each end of the cross member.

3. A system according to claim 1 or 2, wherein the jacking member (40) is removable.

4. A system according to any of the preceding claims, wherein the jacking member (40) comprises a threaded component.

5. A system according to any of the preceding claims, in which the mount (32) comprises a screw threaded portion or nut.

6. A system according to any of the preceding claims, wherein the mount (32) is provided on the cross member

7. A system according to any of the preceding claims, wherein the mount comprises a tab extending from the end of the cross member for resting on the side member.

8. A system according to any of the preceding claims, wherein the tool (42) has a pair of plates (48) extending from a body portion.

9. A system according to any of the preceding claims, wherein the tool (42) comprises a handle portion (44) for gripping the tool.

10. A system according to any of the preceding claims, wherein the tool (42) is formed of shaped sheet metal material.

11. A system according to any of the preceding claims, wherein the tool (42) comprises magnetic material for keeping the tool in place against the side member during use.

12. A system according to any of the preceding claims, wherein the tool (42) comprises a flexible attachment member (50) such as a string or wire for attaching the jacking member to the tool.

13. A system according to any of the preceding claims, wherein the cross member (6) is arranged to be bolted to the side members (4) to secure the component in position.

14. A system according to any of the preceding claims, wherein the machine is an engine and the component is a radiator which is to be aligned with a fan.

15. A method of assembling a bed frame for a machine comprising a plurality of components, the bed frame comprising a pair of opposing side members (4), and a cross member (6) for mounting a component of the machine, the cross member (6) extending between the side members (4) and being attachable to the side members, the method comprising:
adjusting the position of the cross member relative to the side member using an adjustment arrangement comprising a mount (32) for a jacking member (40), the mount being associated with the cross member (6),
**characterised by**:
inserting a tool (42) into a recess or cut-out (36) in the side member, the tool having a plate (48) which fits within the recess or cut-out to provide a jacking surface for a jacking member (40); and
adjusting the position of the cross member relative to the side member using the jacking member (40) and the mount (32) for the jacking member.

## Patentansprüche

1. System zum Montieren und Justieren einer Komponente einer Maschine, wobei das System aufweist:
einen Untergestellrahmen (2) für die Maschine, wobei der Untergestellrahmen ein Paar von gegenüberliegenden Seitenelementen (4) und ein Querelement (6) zum Montieren eines Bauteils der Maschine aufweist, wobei sich das Querelement (6) zwischen den Seitenelementen (4) erstreckt und an den Seitenelementen befestigt werden kann; und
eine Justieranordnung zum Justieren der Position des Querelementes relativ zum Seitenelement, wobei die Justieranordnung eine Befestigung (32) für ein Aufbockelement (40) aufweist, wobei die Befestigung mit dem Querelement (6) verbunden ist;
**dadurch gekennzeichnet, dass:**
das System weiter ein entfernbares Werkzeug (42) aufweist, das ein Aufbockelement (40) beinhaltet, wobei das entfernbare Werkzeug (42) eine Aufbockfläche für das Aufbockelement bereitstellt;
das Seitenelement (4) eine Ausnehmung oder Aussparung (36) aufweist, die ausgebildet ist, um das Werkzeug (42) aufzunehmen; und
das Werkzeug (42) eine Platte (48) aufweist, die ausgebildet ist, um in die Ausnehmung oder Aussparung des Seitenelementes eingesteckt zu werden, um die Aufbockfläche bereitzustellen.

2. System nach Anspruch 1, wobei zwei mit Abstand angeordnete Justieranordnungen an jedem Ende des Querelementes vorgesehen sind.

3. System nach Anspruch 1 oder 2, wobei das Aufbockelement (40) entfernbar ist.

4. System nach einem der vorhergehenden Ansprüche, wobei das Aufbockelement (40) ein mit Gewinde versehenes Bauteil aufweist.

5. System nach einem der vorhergehenden Ansprüche, bei dem die Befestigung (32) einen Schraubgewindeabschnitt oder eine Mutter aufweist.

6. System nach einem der vorhergehenden Ansprüche, wobei die Befestigung (32) an dem Querelement vorgesehen ist.

7. System nach einem der vorhergehenden Ansprüche, wobei die Befestigung eine Lasche aufweist, die sich von dem Ende des Querelementes erstreckt, um auf dem Seitenelement aufzuliegen.

8. System nach einem der vorhergehenden Ansprüche, wobei das Werkzeug (42) ein Paar von Platten (48) aufweist, die sich von einem Körperabschnitt aus erstrecken.

9. System nach einem der vorhergehenden Ansprüche, wobei das Werkzeug (42) einen Griffabschnitt (44) zum Greifen des Werkzeugs aufweist.

10. System nach einem der vorhergehenden Ansprüche, wobei das Werkzeug (42) aus einem profilierten Metallblechmaterial ausgebildet ist.

11. System nach einem der vorhergehenden Ansprüche, wobei das Werkzeug (42) magnetisches Material aufweist, um das Werkzeug während des Gebrauchs an seinem Ort gegen das Seitenelement zu halten.

12. System nach einem der vorhergehenden Ansprüche, wobei das Werkzeug (42) ein flexibles Befestigungselement (50) wie beispielsweise eine Schnur oder einen Draht aufweist, um das Aufbockelement an dem Werkzeug zu befestigen.

13. System nach einem der vorhergehenden Ansprüche, wobei das Querelement (6) ausgebildet ist, um an den Seitenelementen (4) mit Bolzen befestigt zu werden, um das Bauteil an seiner Position zu befestigen.

14. System nach einem der vorhergehenden Ansprüche, wobei die Maschine eine Antriebsmaschine ist und das Bauteil ein Kühler ist, der zu einem Ventilator ausgerichtet werden soll.

15. Verfahren zum Montieren eines Untergestellrahmens für eine Maschine, die eine Mehrzahl von Bauteilen aufweist, wobei der Untergestellrahmen ein Paar von gegenüberliegenden Seitenelementen (4) und ein Querelement (6) zum Montieren eines Bauteils der Maschine aufweist, wobei sich das Querelement (6) zwischen den Seitenelementen (4) erstreckt und an den Seitenelementen befestigt werden kann, und wobei das Verfahren umfasst:
Justieren der Position des Querelementes relativ zum Seitenelement unter Verwendung einer Justieranordnung, die eine Befestigung (32) für ein Aufbockelement (40) aufweist, wobei die Befestigung mit dem Querelement (6) verbunden ist;
**gekennzeichnet durch:**
Einstecken eines Werkzeugs (42) in eine Ausnehmung oder Aussparung (36) in dem Seitenelement, wobei das Werkzeug eine Platte (48) aufweist, die in die Ausnehmung oder Aussparung passt, um eine Aufbockfläche für ein Aufbockelement (40) bereitzustellen; und
Justieren der Position des Querelementes relativ zum Seitenelement unter Verwendung des Aufbockelementes (40) und der Befestigung (32) für das Aufbockelement.

## Revendications

1. Système pour monter et ajuster un composant d'une machine, le système comprenant :
un châssis de bâti (2) pour la machine, le châssis de bâti comprenant une paire d'éléments latéraux opposés (4) et une traverse (6) pour monter un composant de la machine, la traverse (6) s'étendant entre les éléments latéraux (4) et pouvant être fixée aux éléments latéraux ; et
un agencement d'ajustement pour ajuster la position de la traverse par rapport à l'élément latéral, l'agencement d'ajustement comprenant un support (32) pour un élément de vérinage (40), le support étant associé à la traverse (6),
**caractérisé en ce que** :
le système comprend en outre un outil amovible (42) comprenant un élément de vérinage (40), l'outil amovible (42) fournissant une surface de vérinage pour l'élément de vérinage ;
l'élément latéral (4) comprend un évidement ou découpe (36) agencé(e) pour recevoir l'outil (42) ; et
l'outil (42) comprend une plaque (48) qui est agencée pour s'adapter à l'intérieur de l'évidement ou découpe de l'élément latéral afin de fournir la surface de vérinage.

2. Système selon la revendication 1, dans lequel on prévoit deux agencements d'ajustement espacés au niveau de chaque extrémité de la traverse.

3. Système selon la revendication 1 ou 2, dans lequel l'élément de vérinage (40) est amovible.

4. Système selon l'une quelconque des revendications précédentes, dans lequel l'élément de vérinage (40) comprend un composant fileté.

5. Système selon l'une quelconque des revendications précédentes, dans lequel le support (32) comprend une partie filetée ou un écrou.

6. Système selon l'une quelconque des revendications précédentes, dans lequel le support (32) est prévu sur la traverse.

7. Système selon l'une quelconque des revendications précédentes, dans lequel le support comprend une languette s'étendant à partir de l'extrémité de la traverse pour s'appuyer sur l'élément latéral.

8. Système selon l'une quelconque des revendications précédentes, dans lequel l'outil (42) a une paire de plaques (48) s'étendant à partir d'une partie de corps.

9. Système selon l'une quelconque des revendications précédentes, dans lequel l'outil (42) comprend une partie de poignée (44) pour saisir l'outil.

10. Système selon l'une quelconque des revendications précédentes, dans lequel l'outil (42) est formé avec un matériau métallique en forme de feuille.

11. Système selon l'une quelconque des revendications précédentes, dans lequel l'outil (42) comprend un matériau magnétique pour maintenir l'outil en place contre l'élément latéral, pendant l'utilisation.

12. Système selon l'une quelconque des revendications précédentes, dans lequel l'outil (42) comprend un élément de fixation flexible (50), tel qu'une ficelle ou un fil pour fixer l'élément de vérinage à l'outil.

13. Système selon l'une quelconque des revendications précédentes, dans lequel la traverse (6) est agencée pour être boulonnée sur les éléments latéraux (4) afin de fixer le composant en position.

14. Système selon l'une quelconque des revendications précédentes, dans lequel la machine est un moteur et le composant est un radiateur qui doit être aligné avec un ventilateur.

15. Procédé pour assembler un châssis de bâti pour une machine comprenant une pluralité de composants, le châssis de bâti comprenant une paire d'éléments latéraux opposés (4) et une traverse (6) pour monter un composant de la machine, la traverse (6) s'étendant entre les éléments latéraux (4) et pouvant être fixée sur les éléments latéraux, le procédé comprenant l'étape consistant à :
ajuster la position de la traverse par rapport à l'élément latéral, en utilisant un agencement d'ajustement comprenant un support (32) pour un élément de vérinage (40), le support étant associé à la traverse (6), **caractérisé par** les étapes consistant à :
insérer un outil (42) dans un évidement ou découpe (36) dans l'élément latéral, l'outil ayant une plaque (48) qui s'adapte à l'intérieur de l'évidement ou de la découpe afin de fournir une surface de vérinage pour un élément de vérinage (40) ; et
ajuster la position de la traverse par rapport à l'élément latéral en utilisant l'élément de vérinage (40) et le support (32) pour l'élément de vérinage.
